# EUROPEAN PATENT APPLICATION

(11) **EP 2 355 103 A1**
(43) Date of publication of application: **10.08.2011**
(21) Application number: 11151998.9
(22) Date of filing: 25.01.2011
(51) Int. Cl.: G11B 7/135

(54) **Optical pickup device**

(30) Priority: 04.02.2010 KR 20100010560
(71) Applicant: SAMSUNG ELECTRONICS CO., LTD., Suwon-si Gyeonggi-do 442-742 (KR)
(72) Inventor: Park, Soo Han, Gyeonggi-do (KR); Kim, Bong Gi, Gyeonggi-do (KR); Morishita, Ichiro, Yokohama 230-0027 (JP)
(74) Representative: Land, Addick Adrianus Gosling

(57) **Abstract**

An optical pickup includes a collimator lens (4,6,8) having a diverging lens (4a) and a converging lens (4b), such that it maintains a constant focal length and has a short optical path length. The collimator lens of the optical pickup device includes a diverging lens located at the side of a light source (26) and a converging lens located at the side of generating parallel light or gentle oscillation light. In addition, the diverging lens and the converging lens of the collimator lens may be integrated (6), or may also be formed of a hologram optical element (8). As a result, the optical pickup device can be configured in the form of a slim structure using the collimator lens having a short optical path length.

## Description

Embodiments of the present general inventive concept relate to an optical pickup device for recording information by illuminating a laser beam on an optical disc such as a Compact Disc (CD), a Digital Versatile Disc (DVD), or a Blu-ray Disc (BD), receiving a reflection beam reflected from an optical disc, and reproducing the information recorded in the optical disc.

With the increasing development of video and audio media, an optical disc capable of recording and storing high-quality video information and high-quality audio information has been developed and rapidly come into wide use. Typically, an optical disc such as CD or DVD has been widely used as a recording medium capable of recording and/or reproducing information such as voice, images, documents, etc. In recent times, as the recording capacity of the optical disc gradually approaches a critical limit, new types of optical discs, for example, a BD (Blu-ray Disc Recordable/Rewritable) or a CBHD (China Blue High Definition), have been developed and rapidly come into wide use.

However, a 3-wavelength compatible recording/reproducing apparatus and a 3-wavelength compatible playback-dedicated apparatus, each of which can utilize CD, DVD, and CBHD/BD, can be manufactured with a lower cost as the range of the market is gradually extended, resulting in implementation of a slim-type apparatus. In order to manufacture a low-priced apparatus, it is necessary for the number of optical components constructing the optical pickup device to be reduced, and, as such, one common objective lens, i.e., a 3-wavelength compatible objective lens, is being rapidly developed.

Although a first effective diameter (Φ) of a BD's objective lens is about 2.5mm, a second effective diameter (Φ) of a 3-wavelength compatible objective lens is about 3.74mm, corresponding to 1.5 times the first effective diameter. If the BD's effective diameter is decided as described above, the size of the collimator lens is increased by about 1.5 times, and a focal length of the collimator lens is also increased by about 1.5 times. Generally, the focal length of the collimator lens is about 16mm ∼ 20mm. If the focal length is increased by 1.5 times, the increased focal length is 24mm ∼ 30mm. However, a slim-type optical pickup device has a limitation in outward appearance, such that it is difficult to install the 1.5-times enlarged collimator lens into the slim-type optical pickup device.

### SUMMARY

Therefore, it is an aspect of the present general inventive concept to provide an optical pickup device including a collimator lens that is comprised of a diverging lens and a converging lens.

Additional features of the general inventive concept will be set forth in part in the description which follows and, in part, will be obvious from the description, or may be learned by practice of the general inventive concept.

Features and/or utilities of the present general inventive concept may be realized by an optical pickup device including a light source to emit a light beam, a collimator lens to convert the light beam emitted from the light source into a parallel beam, a wavelength plate to polarize the light beam passing through the collimator lens, and an objective lens to form a light spot on an optical disc by focusing the light beam passing through the wavelength plate, wherein the collimator lens includes a diverging lens for diverging the light beam emitted from the light source and a converging lens for converting the light beam emitted from the diverging lens into a parallel light beam.

The collimator lens may include two lenses in which the diverging lens and the converging lens are separated from each other. The collimator lens may include a diverging lens and a converging lens that are integrated in one unit. The collimator lens may be a hologram optical element. The collimator lens may be comprised of a diverging lens and a converging lens.

At least one of the diverging lens and the converging lens belonging to the collimator lens may be aspheric at one surface or both surfaces.

The optical pickup device may further include a reflection mirror to reflect the light beam emitted from the light source upon the objective lens. The optical pickup device may further include a photo-detector which receives a reflection light beam formed when a light spot formed on the optical disc is reflected, and thus detects an information signal or an error signal. The optical pickup device may further include a beam distributor which directs the light beam emitted from the light source to the collimator lens and transmits the reflection light beam formed when the light spot formed on the optical disc is reflected to the photo-detector.

The collimator lens may be located between the beam distributor and the reflection mirror. The diverging lens may be located between the light source and the beam distributor, and the converging lens may be located between the beam distributor and the reflection mirror.

Features and/or utilities of the present general inventive concept may also be realized by an optical pickup device that includes a light source to emit a light beam, a collimator lens to convert the light beam emitted from the light source into a parallel beam, a wavelength plate to polarize the light beam passing through the collimator lens, and an objective lens to form a light spot on an optical disc by focusing the light beam passing through the wavelength plate, wherein the collimator lens is formed of a hologram optical element.

The hologram optical element may perform diverging and converging of the light beam emitted from the light source.

Features and/or utilities of the present general inventive concept may also be realized by a collimator lens of an optical pickup device including a first surface to receive light having a first spread angle with respect to a center axis, at least one body to change the spread angle of the light to a second spread angle greater than the first spread angle, and a second surface to convert the light having the second spread angle to a light beam having light travelling substantially parallel to the center axis.

The at least one body may include a first body and a second body, the first body may include the first surface, the first surface may be a concave surface, the second body may include the second surface, and the second surface may be a convex surface.

The first body may include a third surface opposite the first surface, the second body may include a fourth surface opposite the second surface, the light travelling in the first body between the first and third surfaces may have the second spread angle, and the light travelling between the third surface of the first body and the fourth surface of the second body may have the first spread angle.

The collimator lens may be a hologram optical element.

Features and/or utilities of the present general inventive concept may also include an optical pickup device including a light source to generate light, a collimator lens to receive light from the light source having a first spread angle with respect to a center axis, to change the spread angle to a second spread angle larger than the first spread angle for a first distance, and to convert the light having the second spread angle to a light beam having light travelling substantially parallel to the center axis, and an objective lens to receive the light from the collimator lens and to focus the light onto an optical disc.

The collimator lens may include a first lens and a second lens separated by a predetermined distance, the first lens may change the spread angle of the light to a third spread angle, the light between the first lens and the second lens may have a fourth spread angle different from the second spread angle, and the second lens may change the spread angle of the light between the first and second lenses to the second spread angle and may convert the light having the second spread angle to the light beam having light travelling substantially parallel to the center axis.

The first lens may have a first surface having a concave shape to receive the light having the first spread angle, and the second lens may have a second surface having a convex shape to emit the light beam having light travelling substantially parallel to the center axis.

The optical pickup device may further include a polarization beam distributor located along a light path between the first and second lenses to pass light travelling in a first direction of the light path and to reflect light travelling in a second direction of the light path substantially opposite to the first direction.

The collimator lens may be only a single lens.

The collimator lens may include a first surface having a concave shape to receive the light having the first spread angle and a second surface having a convex shape to emit the light beam having light travelling substantially parallel to the center axis.

Features and/or utilities of the present general inventive concept may include an optical disc device including an optical disc to store data, an optical pickup device to transmit light to the optical disc and to detect light reflected from the optical disc to write data to and read data from the optical disc, and a controller to control the optical pickup device and a rotation of the optical disc to control a read operation and a write operation. The optical pickup device may include a light source to generate light, a collimator lens to receive light from the light source having a first spread angle with respect to a center axis, to change the spread angle to a second spread angle larger than the first spread angle for a first distance, and to convert the light having the second spread angle to a light beam having light travelling substantially parallel to the center axis, and an objective lens to receive the light from the collimator lens and to focus the light onto an optical disc.

### BRIEF DESCRIPTION OF THE DRAWINGS

These and/or other aspects of the general inventive concept will become apparent and more readily appreciated from the following description of the embodiments, taken in conjunction with the accompanying drawings of which:
FIG. 1 is a table illustrating a 3-wavelength objective lens applied to an optical pickup device according to an exemplary embodiment of the present general inventive concept.
FIG. 2 illustrates an effective diameter and a focal length of a collimator lens needed for a 3-wavelength objective lens applied to an optical pickup device according to an exemplary embodiment of the present general inventive concept.
FIG. 3 illustrates a first example of a collimator lens structure applied to an optical pickup device according to an exemplary embodiment of the present general inventive concept.
FIG. 4 illustrates a second example of a collimator lens structure applied to an optical pickup device according to an exemplary embodiment of the present general inventive concept.
FIG. 5 illustrates a third example of a collimator lens structure applied to an optical pickup device according to an exemplary embodiment of the present general inventive concept.
FIG. 6 illustrates an optical pickup device according to one embodiment of the present general inventive concept.
FIG. 7 illustrates an optical pickup device according to another embodiment of the present general inventive concept.
FIG. 8 illustrates an optical pickup device according to still another embodiment of the present general inventive concept.
FIG. 9 illustrates an optical pickup device according to still another embodiment of the present general inventive concept.
FIG. 10 illustrates an optical disc device including an optical pickup device of an embodiment of the present general inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to like elements throughout.

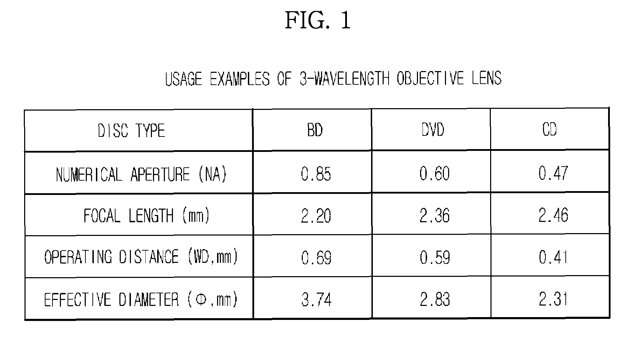

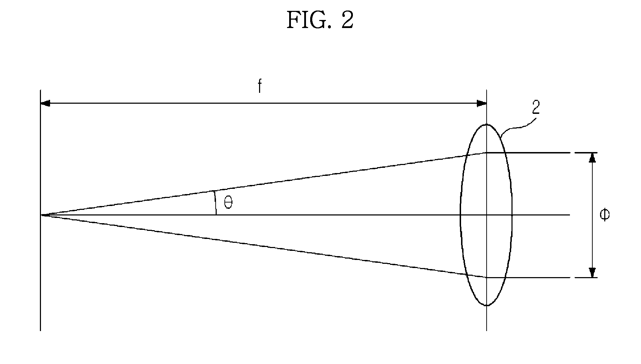

As described above, an objective lens for a BD has an effective diameter (Φ) of 2.5mm. On the other hand, the use of the 3-wavelength compatible objective lens is shown in Table 1 of FIG. 1. As shown in FIG. 1, in order to increase the integration degree of a playback and recording of information simultaneously with both the change from CD to DVD and the change from DVD to BD, it can be recognized that a Numerical Aperture (NA) is increased, a focal length is decreased, and an effective diameter (Φ) is increased. In case of BD, the effective diameter (Φ) is increased from 2.5mm to 3.74mm by about 1.5 times. As shown in FIG. 2, in association with a Far Field Pattern (FFP) of a laser beam generated from a laser diode (LD), an angle θ of the collimator lens 2 is decided, the collimator lens 2 is increased by 1.5 times, and a focal length (f) of the collimator lens 2 is increased by about 1.5 times.

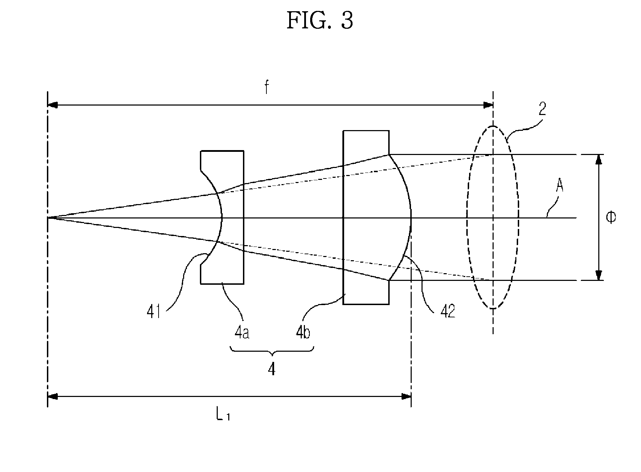

As previously stated above, it may be difficult for the 1.5-times enlarged collimator lens 2 to be installed in the slim-type optical pickup device. Generally, the collimator lens 2 is comprised of one convex lens, and a difference between a focal length and an optical path length thereof is about 1 mm, such that the focal length and the optical path length are considered to be very similar to each other. However, in the case where the collimator lens is greatly increased in size because of the use of the 3-wavelength compatible objective lens, if the focal length is unchanged and the optical path length is decreased, the large-sized collimator lens can be applied to the slim-type optical pickup device. Hereinafter, the collimator lens capable of reducing an optical path length while simultaneously maintaining an unchanged focal length will hereinafter be described with reference to FIGS. 3 to 5.

As illustrated in FIG. 3, in order to reduce an optical path length without changing a focal length (f), the collimator lens 4 includes a diverging lens 4a with a concave surface and a converging lens 4b with a convex surface. If a light beam passes through the diverging lens 4a, the light beam diverges, and then converges by passing through the converging lens 4b, so that the light beam is converted into a parallel light beam or a gently diverging or converging light beam. A gently diverging light beam may have rays of light that diverge only a small degree from a center axis of the light, such as within five to ten degrees of a direction parallel to the center axis. As can be seen from FIG. 3, a focal length (f) and an effective diameter (Φ) are constantly maintained and the optical path length (L1) is made short. In the case of using the collimator lens 4 having a short optical path length (L1), an optical pickup device of using the 3-wavelength objective lens can be configured in a slim structure.

In this case, at least one surface of at least one of the diverging lens 4a and the converging lens 4b of the collimator lens 4 is aspheric so that a good collimating light beam can be formed. In addition, the diverging lens 4a and the converging lens 4b may be movable in the direction of an optical axis so as to correct aberration generated by a variety of causes, i.e., a difference in thickness among CD, DVD and CHBD/HD, a difference in thickness among respective optical discs, a wavelength variation in response to temperature, and an oscillation wavelength deviation of a laser diode. For example, at least one of the diverging lens 4a and the converging lens 4b may be mounted to a track. A fixing element such as a clasp, screw, or other device may fix the lens 4a or 4b in place on the track and may be loosened to adjust a location of the lens 4a or 4b on the track. Once the lens 4a or 4b is adjusted, it may be permanently affixed to the track by an adhesive, a welding process, or any other appropriate process to prevent the adjusted lens 4a or 4b from moving along the track.

As illustrated in FIG. 3, the light contacting the concave surface 41 of the diverging lens 4a has a first spread angle with respect to a center axis A of the light. The spread angle may be defined as an angle having at its center the axis A of the light defined at its extremes by the borders of the light. For example, while some light rays may diffuse, the spread angle of the light may be defined as the angle within which eighty to ninety-five percent of the light travels. The spread angle may also be defined as twice the angle θ of the collimator lens 4. Within the diverging lens 4a the light has a second spread angle different from the first spread angle. The light between the diverging lens 4a and the converging lens 4b has a third spread angle that is different from the second spread angle. For example, the third spread angle may be the same or substantially the same as the first spread angle. The light within the converging lens 4b has a fourth spread angle different from the third spread angle, and the light exiting the convex surface 42 of the converging lens travels substantially parallel to the center axis A of the light beam.

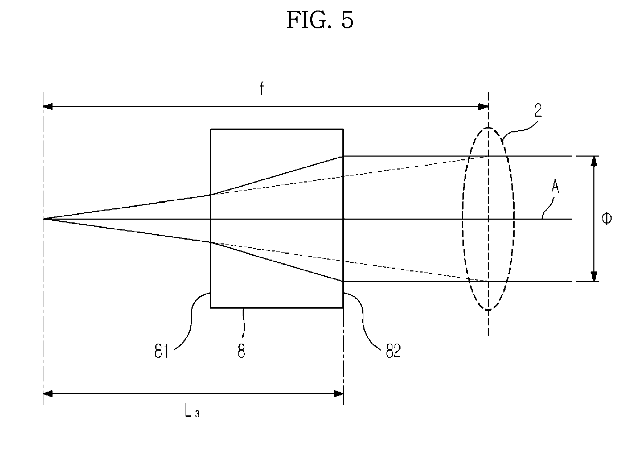

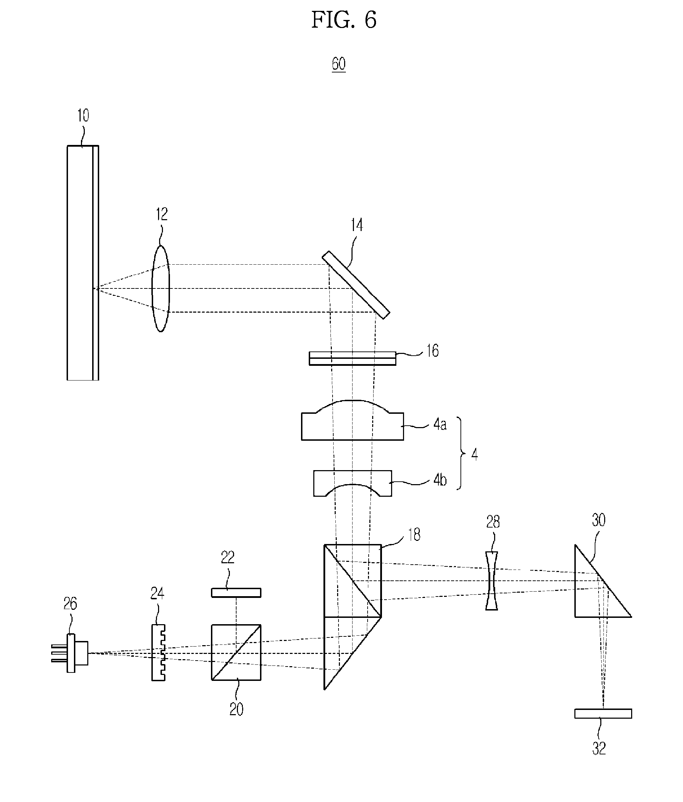

In this case, as shown in FIG. 3, the collimator lens 4 may include a diverging lens 4a and a converging lens 4b separated from each other, but it should be noted that the diverging lens 4a and the converging lens 4b may be separated from each other as necessary. A detailed description thereof will hereinafter be described with reference to FIGS. 5 and 6.

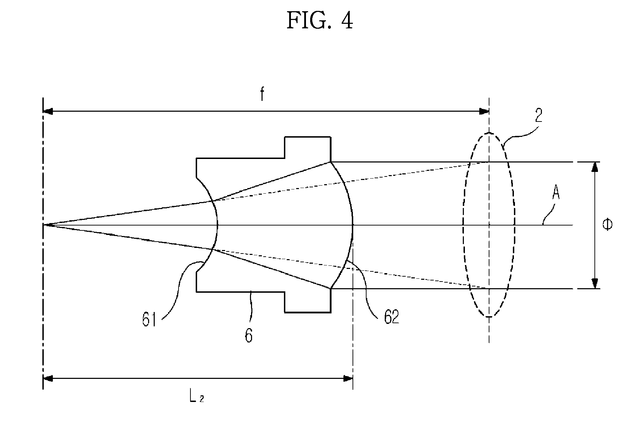

Referring to FIG. 4, the collimator lens 18 may include a diverging lens and a converging lens that are integrated in one unit. If the diverging lens and the converging lens are integrated in one unit, the optical path length (L2) may be further decreased, and the number of lenses is reduced, resulting in reduction of production cost.

When the collimator lens 6 is a single lens, the light may enter a concave surface 61 having a first spread angle with respect to a center axis A, may travel within the collimator lens 6 having a second spread angle different from the first spread angle, and may exit the convex surface 62 of the lens as a beam of light travelling substantially parallel to the center axis A of the light.

Referring to FIG. 5, the collimator lens 16 may be formed of a diffraction lens (e.g., a hologram optical element) having a circular diffraction structure centered on an optical axis. The hologram optical element may perform diverging and converging of the light beam emitted from the light source, and has a short optical path length (L3) as shown in FIG. 5. The optical pickup device including the above-mentioned collimator lens 4, 6 or 8 will hereinafter be described with reference to the attached drawings.

When the collimator lens 8 is formed of a diffraction lens or a hologram optical element, the light may enter a first surface 81 having a first spread angle with respect to a center axis A, may travel within the collimator lens 8 having a second spread angle different from the first spread angle, and may exit a second surface 82 of the lens as a beam of light travelling substantially parallel to the center axis A of the light. The first and second surfaces 81 and 82 may be substantially flat surfaces that are parallel to each other.

Referring to FIG. 6, the optical pickup device 60 includes an optical disc 10 such as CD, DVD, CBHD/BD or the like, a light source 26 for emitting a laser beam having a wavelength corresponding to the optical disc format 10, an objective lens 12 for focusing the light beam emitted from the light source 26 so as to form a light spot on a signal recording layer of the optical disc 10, and a photo-detector 32 to receive a light beam that is reflected from the optical disc 12 after having been focused on the optical disc 10 by the objective lens 12, and to detect an information signal and/or an error signal. The optical pickup device 60 includes a reflection mirror 14, a wavelength plate 16, a collimator lens 4, a polarization beam distributor 18, a first beam distributor 20, a second beam distributor 30, an astigmatism lens 28, a photo-detector 32, a front photo diode 22, and a grating 24.

The optical disc 10 may be one of various kinds of optical discs having different use wavelengths and different recording densities, such as CD, DVD, and BD, and the like.

The light source 26 emits wavelengths corresponding to three cases, wherein a first case is that the optical disc 10 is a CD, a second case is that the optical disc 10 is a DVD, and a third case is that the optical disc 10 is a CBHD/BD. That is, the light source 26 may emit a blue ray having a 400nm wavelength area (i.e., a wavelength of about 540nm or less) that is suitable for CBHD/BD having relatively high recording density, a red ray having a 600nm wavelength area (i.e., a wavelength of about 600nm 660nm) that is suitable for DVD having recording density lower than that of the CBHD/BD, and an infrared ray having a 700nm wavelength area (i.e., a wavelength of about 700nm 800nm) that is suitable for CD having recording density lower than that of the DVD. Although FIG. 6 illustrates that wavelengths of the above-mentioned three cases are selectively emitted through only one light source 26, it should be noted that an additional beam distributor may be added such that two or three light sources may be separately installed according to design specifications.

The objective lens 12 may be formed of the aforementioned 3-wavelength objective lens. That is, in order to reduce the number of constituent components of the optical pickup device and to construct a slim-sized optical pickup device, a 3-wavelength objective lens compatible with all wavelengths disclosed in the above-mentioned three cases may be used. A detailed description of the characteristics of the objective lens 12 is provided in the Table of FIG. 1.

The grating 24 divides a light beam emitted from the light source 26 into three beams. The grating 24 is used as a light division diffraction element that divides a light beam emitted from the light source 26 into 0-order light (i.e., main light beam) and ±1-order light (i.e., sub-light beam), such that it can detect a tracking error signal using a three-beam method or a DPP method. The grating 24 obtains a playback signal from the 0-order light reflected from the optical disc 10, and obtains a tracking error signal by an operation between one detection signal of the 0-order light reflected from the optical disc 10 and the other detection signal of the ±1- order light reflected from the optical disc 10.

The polarization beam distributor 18 directs a traveling direction of the light to a polarization direction. The first beam distributor 20 is installed between the grating 24 and the polarization beam distributor 18, such that it allows the light beam passing through the grating 24 to be incident upon the polarization beam distributor 18 and the front photo diode 22. The front photo diode 22 controls an output value of a light beam emitted from the light source 26. The second beam distributor 30 is installed between the astigmatism lens 24 and the photo-detector 32 so that it transmits the light beam passing through the astigmatism lens 24 to the photo-detector 32. The photo-detector 32 receives the light beam reflected from the surface (i.e., a signal recording layer) of the optical disc 10, such that it may be formed of a photo-diode to detect an information signal and/or an error signal.

In addition, the collimator lens 4, the wavelength plate 16, and the reflection mirror 14 are installed between the objective lens 12 and the polarization beam distributor 18. The collimator lens 4 converts a diverging light beam passing through the polarization beam distributor 18 into a parallel light beam.

The wavelength plate 16 polarizes the light beam passing through the collimator lens 4. That is, the wavelength plate 16 converts a straight polarized light into a circular polarized light using birefringence. The optical pickup device according to one embodiment of the present general inventive concept uses a 3-wavelength light source, and may use a 1/4 wavelength plate compatible with 3 wavelengths in response to a 3-wavelength objective lens. In addition, the 1/4 wavelength plate may be installed to have an angle from 45° to 90° with reference to an optical axis emitted from the light source, such that the light beam is converted into an elliptical polarized beam instead of a circular polarized beam.

The reflection mirror 14 reflects a light beam passing through the wavelength plate 16, and performs path switching such that the traveling path of the light beam is directed to the objective lens 12.

Operations of the above-mentioned optical pickup device will hereinafter be described. The light beam emitted from the light source 26 passes through the grating 24, is diffracted, and is divided into 0-order light (i.e., main light beam) and ±1-order light (i.e., sub-light beam) so as to detect a tracking error signal, such that three beams are formed. The three beams pass through the polarization beam distributor 18, and pass through the collimator lens 4, such that they are converted into a parallel beam. This parallel beam passes through the wavelength plate 16, such that it is converted into a circular or elliptical polarized beam. This circular or elliptical polarized beam is reflected from the reflection mirror 14, and passes through the objective lens 12, such that a light spot is formed on the signal recording layer of the optical disc 10. The light beam reflected from the optical disc 10 passes through the objective lens 12, and is reflected from the reflection mirror 14, such that the resultant light beam is incident upon the wavelength plate 16. If the light beam passes through the wavelength plate 16, the circular or elliptical polarized beam is converted into a straight polarized beam. The straight polarized beam passes through the collimator lens 4, the polarization beam distributor 18, and the astigmatism lens 28, is reflected from the second beam distributor 30, and is incident upon the photo-detector 32. In this way, information may be recorded in the optical disc 10, or information recorded in the optical disc 10 is read.

In this case, the collimator lens 4 includes a diverging lens 4a and a converging lens 4b as previously stated above, such that it has a short optical path length. Because the collimator lens 4 having a short optical path length is selected, the optical pickup device can be configured in the form of a slim structure.

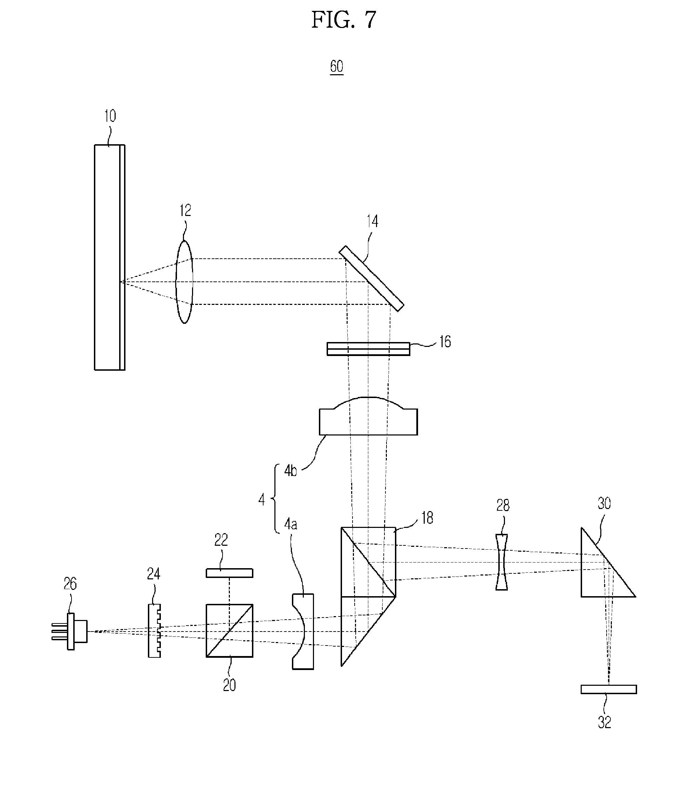

As can be seen from FIG. 6, the collimator lens 4 is installed between the polarization beam distributor 18 and the reflection mirror 14. An optical pickup device having an arrangement format different from that of the collimator lens 4 and another optical pickup device including collimator lenses 6 and 8 different from each other will hereinafter be described with reference to FIGS. 7 to 9.

Although the optical pickup device 60 including the collimator lens 4 of FIG. 6 is shown in FIG. 7, it should be noted that arrangement of the diverging lens 4a and the converging lens 4b of the collimator lens 4 is different from that of FIG. 6. In more detail, the diverging lens 4a is installed between the light source 26 and the polarization beam distributor 18, and the converging lens 4b is installed between the polarization beam distributor 18 and the reflection mirror 14. The above-mentioned structure may be particularly effective when the distance between the diverging lens 4a and the converging lens 4b is long, such that curvature of a concave surface is increased.

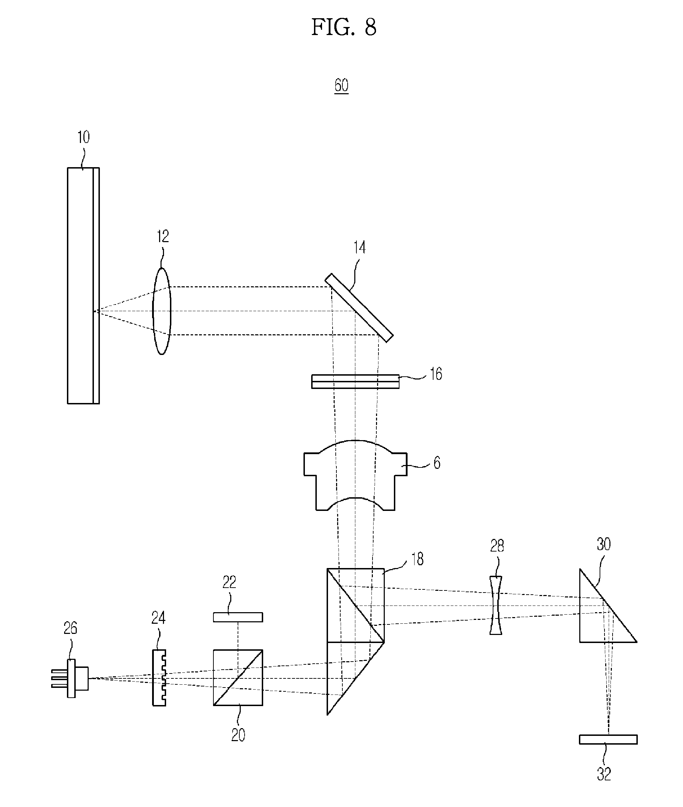

The optical pickup device of FIG. 8 includes an integrated-type collimator lens 6 in which the diverging lens and the converging lens are integrated as one lens. As shown in FIG. 8, the collimator lens 6 is located between the polarization beam distributor 18 and the reflection mirror 14. As described above, the integrated-type collimator lens 6 is used, so that the number of lenses is reduced so that the production cost is also reduced and an optical path length becomes short.

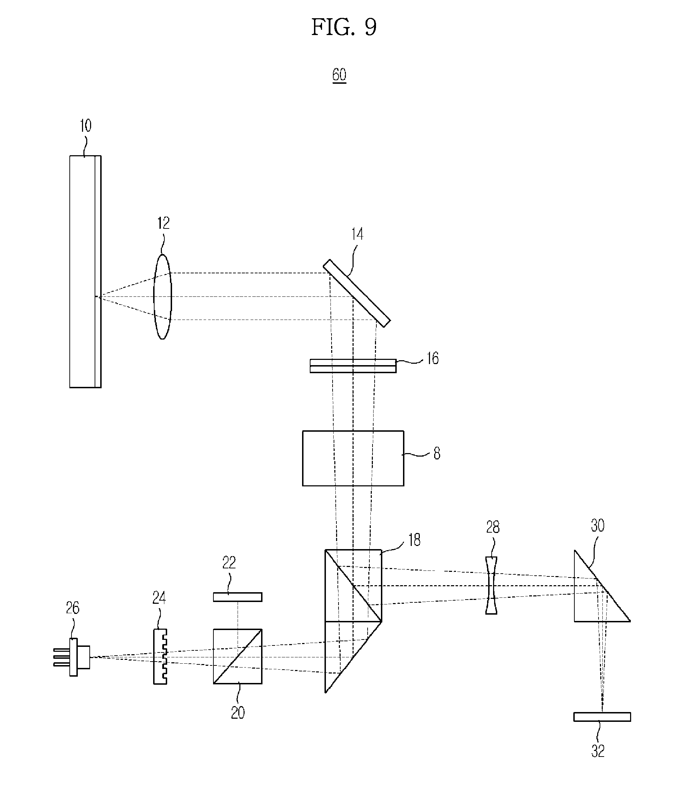

FIG. 9 illustrates an optical pickup device according to still another embodiment of the present general inventive concept.

In FIG. 9, the optical pickup device includes a collimator lens 8 comprised of a hologram optical element. That is, the collimator lens 8 is formed of a diffraction lens (e.g., a hologram optical element) having a circular diffraction structure centered on an optical axis.

As described above, an optical pickup device is designed to have collimator lenses 4, 6 and 8 each having an optical path length, such that the optical pickup device based on the 3-wavelength objective lens can be configured in the form of a slim structure.

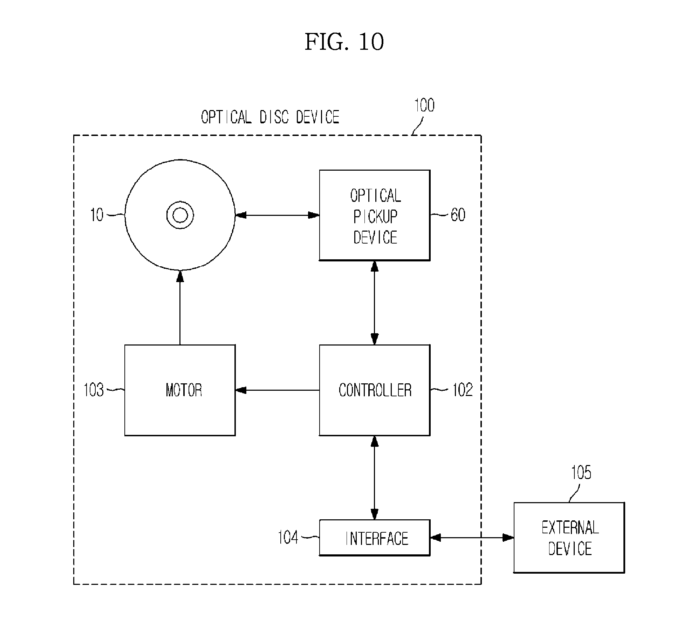

FIG. 10 illustrates an optical disc device 100 according to an embodiment of the present general inventive concept. The optical disc device 100 may include the optical pickup device 60 described above, including the collimator lens having both concave and convex surfaces or a hologram optical element. The optical disc device 100 may further include a disc 10, a motor 103 to spin the disc 10, and a controller 102 to control the optical pickup device 60 and the motor 103 to read data from and write data to the disc 10.

The controller 102 may include a processing unit, such as a data processing unit to convert the signals received from the optical pickup device 60 into data to transmit to memory or the interface 904. The controller 102 may further include memory, logic devices, and other electrical components to process and store electronic signals.

The interface 904 may include a user interface to receive data from a user or data ports or terminals to transmit and receive data to and from external devices 905. For example, an external device 905 may be a host computer having a processor, memory, and additional functions. The host computer may receive a command to read data from the optical disc 10, may transmit a command to the controller 102, and may receive the corresponding data from the optical pickup device 60.

As is apparent from the above description, the optical pickup device can be configured in a slim format using a collimator lens comprised of a diverging lens and a converging lens.

Although a few embodiments of the present general inventive concept have been shown and described, it would be appreciated by those skilled in the art that changes may be made in these embodiments without departing from the principles and spirit of the general inventive concept, the scope of which is defined in the claims and their equivalents.

## Claims

1. An optical pickup device comprising:
a light source to emit a light beam;
a collimator lens to convert the light beam emitted from the light source into a parallel beam;
a wavelength plate to polarize the light beam passing through the collimator lens; and
an objective lens to form a light spot on an optical disc by focusing the light beam passing through the wavelength plate,
wherein the collimator lens includes a diverging lens for diverging the light beam emitted from the light source and a converging lens for converting the light beam emitted from the diverging lens into a parallel light beam.

2. The optical pickup device according to claim 1, wherein the collimator lens includes two lenses in which the diverging lens and the converging lens are separated from each other.

3. The optical pickup device according to claim 1 or 2, wherein the collimator lens includes the diverging lens and the converging lens that are integrated in one unit.

4. The optical pickup device according to claim 1, 2 or 3 wherein the collimator lens is a hologram optical element.

5. The optical pickup device according to any of claims 1-4, wherein at least one of the diverging lens and the converging lens belonging to the collimator lens is aspheric at one surface or both surfaces.

6. The optical pickup device according to any of claims 1-5, wherein at least one of the diverging lens and the converging lens belonging to the collimator lens is movable in an optical-axis direction.

7. The optical pickup device according to any of claims 1-6, further comprising:
a reflection mirror to reflect the light beam emitted from the light source upon the objective lens.

8. The optical pickup device according to claim 7, further comprising:
a photo-detector which receives a reflection light beam formed when a light spot formed on the optical disc is reflected, and thus detects an information signal or an error signal.

9. The optical pickup device according to claim 8, further comprising:
a beam distributor which directs the light beam emitted from the light source to the collimator lens, and transmits the reflection light beam formed when the light spot formed on the optical disc is reflected to the photo-detector.

10. The optical pickup device according to claim 9, wherein the collimator lens is located between the beam distributor and the reflection mirror.

11. The optical pickup device according to claim 9 or 10, wherein the diverging lens is located between the light source and the beam distributor, and the converging lens is located between the beam distributor and the reflection mirror.

12. A method wherein the device according to any of claims 1-11 is used.
